Europäisches Patentamt

European Patent Office

Office européen des brevets

(11) Veröffentlichungsnummer : **0 119 282**
**B1**

# (12) EUROPÄISCHE PATENTSCHRIFT

(45) Veröffentlichungstag der Patentschrift :
18.06.86

(21) Anmeldenummer : 83102514.3

(22) Anmeldetag : 15.03.83

(51) Int. Cl.⁴ : **H 04 N   9/28, H 04 N   3/26**

(54) Fernsehempfänger mit einem automatischen Digital-Abgleichsystem.

(43) Veröffentlichungstag der Anmeldung :
26.09.84 Patentblatt 84/39

(45) Bekanntmachung des Hinweises auf die Patenterteilung : 18.06.86 Patentblatt 86/25

(84) Benannte Vertragsstaaten :
DE FR GB IT NL

(56) Entgegenhaltungen :
EP-A- 0 003 576
US-A- 4 387 394

(73) Patentinhaber : Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR GB IT NL

(72) Erfinder : Freyberger, Laurin Clemens, Dipl.-Ing.
Unter Stad 3
D-7836 Bahlingen (DE)

(74) Vertreter : Morstadt, Volker, Dipl.-Ing. et al
c/o Deutsche ITT Industries GmbH Patent/Lizenzabteilung Postfach 840 Hans-Bunte-Strasse 19
D-7800 Freiburg/Brsg. (DE)

## Beschreibung

Auf der Offenlegungsschrift DE 28 05 691 A1 ist ein Farbfernsehempfänger mit automatischem Abgleichsystem bekannt, das einen Abgleichrechner, einem umprogrammierbar-nicht-flüchtigen Speicher und ein Schirmbild-Sensorsystem enthält, mit dem Bildschirmsignale abgenommen und als Istwerte dem Abgleichrechner zugeführt werden. Der Abgleichrechner ermittelt aus den Istwerten und vorgegebenen, im Speicher abgelegten Sollwerten digitale Korrektursignale, die insbesondere im Horizontal- und Vertikal-Ablenkteil die gewünschte Einstellung von Bildschirmparametern ergeben. Dabei werden zusätzlich auch die Funktionen, wie z. B. Weißwert-, Graubalance- und Strahlstrombegrenzungs-Einstellung, ersetzt, die im Video-Signalteil sonst von Einstell-Potentiometern ausgeübt werden.

Die genannte Offenlegungsschrift beschäftigt sich nicht mit dem Ersatz des Einstellpotentiometers für die Bildröhren-Fokussierspannung, das bei üblichen Fernsehempfängern in einem Widerstandsnetzwerk angeordnet ist, das aus der vom Bildröhren-Hochspannungsgenerator erzeugten Hochspannung die Fokussierspannung ableitet, vgl. z. B. das Buch von O. Limann « Fernsehtechnik ohne Ballast », 13. Auflage, München 1979, Seiten 275 bis 280. Das Fokussierpotentiometer ist üblicherweise einerseits hochohmig (Größenordnung 10 MΩ) und muß andererseits, da es eine Spannung in der Größenordnung von einigen Kilovolt abgeben muß, hochspannungsfest konstruiert sein.

Der im Patentanspruch angegebenen Erfindung liegt die Aufgabe zugrunde, bei Fernsehempfängern der aus der genannten Offenlegungsschrift bekannten Art, ausgehend von dem dort angegebenen Prinzip zur Vermeidung von Einstellpotentiometern, das Fokuspotentiometer ebenfalls ersetzbar zu machen.

Dabei ergibt sich zunächst aus der Aufgabenlösung der Vorteil, daß das mechanisch aufwendige und damit teure Fokuspotentiometer entfallen kann, was auch bedingt, daß die für seinen Einbau erforderlichen Maßnahmen weitgehend entfallen können. Ferner ergibt sich der Vorteil, daß die Fokussiereinstellung durch ihre Einbeziehung der in die vom Abgleichrechner beeinflußten Größen ebenfalls automatisiert ist.

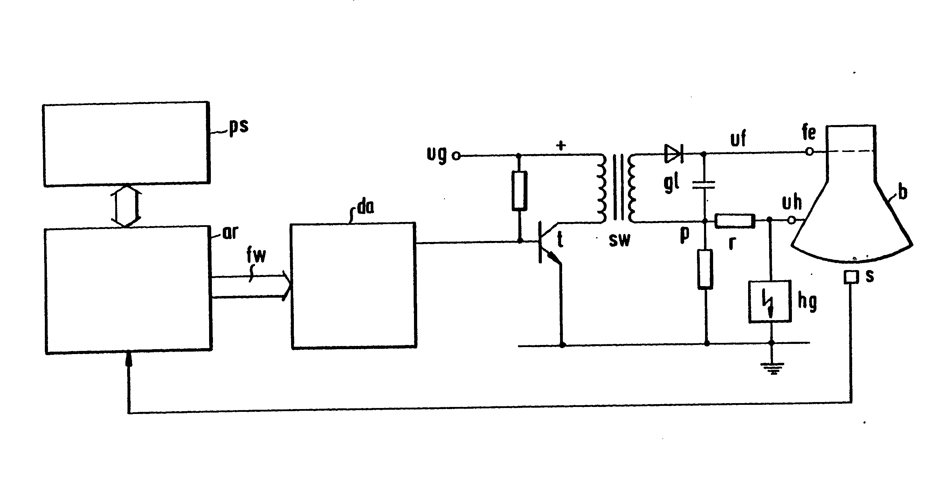

Die Erfindung wird nun anhand des in der Figur gezeigten, teilweise schematischen Schaltbilds eines Ausführungsbeispiels näher erläutert.

Wie beim bekannten Stand der Technik nach der genannten Offenlegungsschrift ist der Abgleichrechner ar vorgesehen, der mit dem umprogrammierbar-nichtflüchtigen Speicher ps derart zusammenarbeitet, daß darin einerseits die erwähnten Solldaten für den Abgleich und andererseits auch die mittels des Sensorsystems s ermittelten Daten sowie die aus dem Abgleich resultierenden Digitalworte gespeichert sind. Das Sensorsystem ist vor dem Bildschirm der Bildröhre b angeordnet, die eine übliche nach dem Kathodenstrahlröhrenprinzip arbeitende Bildröhre ist, die zu ihrem Betrieb eine Anodenspannung benötigt, die vom Bildröhren-Hochspannungsgenerator hg erzeugt wird und üblicherweise etwa 20 bis 25 kV beträgt.

Entsprechend der Erfindung ist derjenige Ausgang des Abgleichrechners ar, an dem das Fokussier-Digitalwort fw auftritt, mit dem Eingang des ein pulsdauermoduliertes Signal bildenden Digital-Analogwandlers da verbunden. Dieser erzeugt also aus dem seinem Eingang zugeführten Digitalwort ein Analogsignal, das bei konstanter Amplitude eine entsprechend variable Pulsdauer aufweist. Dieses Signal ist der Steuerelektrode des Schalttransistors t zugeführt, dessen gesteuerte Schaltstrecke mit ihrem einen Ende am Schaltungsnullpunkt und mit ihrem anderen Ende über die Primärwicklung des Gleichspannungssperrwandlers sw an der Betriebsgleichspannung ug angeschlossen ist. Im Ausführungsbeispiel der Figur liegt der Emitter des Schalttransistors t, der ein Bipolartransistor ist, am Schaltungsnullpunkt. Als Schalttransistoren können auch andere entsprechende Transistorarten, z. B. Feldeffekttransistoren, insbesondere VMOS-Transistoren, verwendet werden.

Während der Schalttransistor t vom pulsdauermodulierten Ausgangssignal des Digital-Analogwandlers da leitend gesteuert ist, fließt in der Primärwicklung des Gleichspannungs-Sperrwandlers sw ein Strom, der den Magnetkern des Wandlers entsprechend magnetisiert und dadurch eine Energiespeicherung bewirkt. Beim Unterbrechen des Stromflusses im Schalttransistor t entsteht auf der Sekundärseite ein entsprechender Spannungsimpuls, der mittels der Gleichrichteranordnung gl, die im Ausführungsbeispiel der Figur aus der gezeichneten Diode und dem gezeichneten Kondensator besteht, gleichgerichtet wird und als Fokussierspannung uf der Fokussierelektrode fe der Bildröhre b zugeführt ist. Der Gleichspannungssperrwandler sw ist dabei so zu dimensionieren, daß der Bildschärfe-Einstellbereich der Bildröhre b durchfahren werden kann, d. h. daß der Einstellbereich dem Einstellbereich eines Fokuspotentiometers nach dem bekannten Stand der Technik entspricht. Dieser Bereich liegt üblicherweise in der Größenordnung von 1 kV.

Die Sekundärwicklung des Gleichspannungssperrwandlers sw liegt über die Gleichrichteranordnung gl zwischen der Fokuselektrode fe der Bildröhre b und einem solchen Punkt p des Widerstandsnetzwerks r, daß dessen Spannung gleich der der einen Bildschärfe-Einstellbereichsgrenze zugeordneten Grenz-Fokussierspannung ist, wobei dann der Betriebswert der Fokussierspannung uf von der Grenz-Fokussierspannung in Richtung auf die der anderen Einstellbereichsgrenze um die gleichgerichtete Sekundärspannung abweicht.

Im Ausführungsbeispiel der Figur ist das Widerstandsnetzwerk r ein Spannungsteiler zwischen dem Anodenanschluß der Bildröhre b, an dem auch der Hochspannungsgenerator hg liegt, und dem Schaltungsnullpunkt, und der Punkt p ist der der unteren Bereichsgrenze zugeordnete Spannungsteiler-Abgriff, der bei etwa 4 bis 4,5 kV liegt. An diesem Abgriff liegt das untere Ende der Sekundärwicklung, und ihr oberes Ende liegt über die Diode an der Fokuselektrode fe. Zwischen der Diodenkathode und dem Punkt p liegt der Kondensator. In der Figur ist vorausgesetzt, daß positive Spannungen erzeugt werden ; demzufolge ist der Schalttransistor t ein npn-Transistor und die Betriebsgleichspannung ug ist positiv. Selbstverständlich läßt sich das Prinzip der Erfindung auch bei zu erzeugenden negativen Fokussierspannungen und entsprechend negativer Hochspannung uh realisieren.

## Patentanspruch

Fernsehempfänger mit einem automatischen Digital-Abgleichsystem, das einen Abgleichrechner (ar), einen umprogrammierbar-nichtflüchtigen Speicher (ps) und ein Schirmbild-Sensorsystem (s) enthält, und mit einem Bildröhren-Hochspannungsgenerator (hg), von dessen Hochspannung (uh) mittels eines Widerstandsnetzwerks (r) auch die Bildröhren-Fokussierspannung (uf) zur Einstellung der Bildschärfe abgeleitet ist, gekennzeichnet durch folgende Merkmale :
ein ein Fokussier-Digitalwort (fw) abgebender Ausgang des Abgleichrechners (a r) liegt am Eingang eines ein pulsdauermoduliertes Signal bildenden Digital-Analogwandlers (da),
sein Ausgang liegt an der Steuerelektrode eines Schalttransistors (t), dessen gesteuerte Schaltstrecke mit ihrem einen Ende am Schaltungsnullpunkt und mit ihrem anderen Ende über die Primärwicklung eines Gleichspannungs-Sperrwandlers (sw) an einer Betriebsgleichspannung (ug) angeschlossen ist,
die Sekundärwicklung des Gleichspannungs-Sperrwandlers (sw) liegt über eine Gleichrichteranordnung (gl) zwischen der Fokuselektrode (fe) der Bildröhre (b) und einem solchen Punkt (p) des Widerstandsnetzwerks (r), daß dessen Spannung gleich der der einen Bildschärfe-Einstellbereichsgrenze zugeordneten Grenz-Fokussierspannung ist, und
der Betriebswert der Fokussierspannung (uf) weicht von der Grenz-Fokussierspannung in Richtung auf die der anderen Einstellbereichsgrenze um die gleichgerichtete Sekundärspannung ab.

## Claim

Television receiver with an automatic digital alignment system containing an alignment computer (ar), a reprogrammable nonvolatile memory (ps), and a screen-image-sensor system (s), and with a high-voltage generator (hg) delivering the high picture-tube voltage (uh), from which the focusing voltage (uf) is derived by means of a resistor network (r), characterized by the following features :
an output of the alignment computer (ar) delivering a digital focusing word (fw) is connected to the input of a digital-to-analog converter (da) forming a pulse-duration-modulated signal ;
the output of the digital-to-analog converter (da) is connected to the control electrode of a switching transistor (t) whose controlled path has one end grounded and the other end connected to a DC supply voltage (ug) through the primary winding of a blocking oscillator (sw) ;
the secondary winding of the blocking oscillator (sw) is connected via a rectifier arrangement (gl) between the focusing electrode (fe) of the picture tube (b) and that point (p) of the resistor network (r) whose voltage is equal to the focusing limit voltage assigned to one of the focusing-range limits, and
the operating value of the focusing voltage (uf) differs from the focusing limit voltage in the direction of the voltage of the other focusing-range limit by the rectified secondary voltage.

## Revendication

Récepteur de télévision doté d'un système d'alignement numérique automatique comprenant un calculateur d'alignement (ar), une mémoire non volatile reprogrammable (ps), ainsi qu'un système de détection de l'image sur l'écran (s) et un générateur de haute tension (hg) fournissant la haute tension pour le tube image (uh) dont est dérivée la tension de focalisation (uf), par l'intermédiaire d'un réseau résistif (r), caractérisé en ce que :
une sortie du calculateur d'alignement (ar) fournissant un mot de focalisation numérique (fw) est connectée à l'entrée d'un convertisseur analogique-numérique (da) formant un signal d'impulsions à modulation de durée ;
la sortie du convertisseur analogique-numérique (da) est connectée à l'électrode de commande d'un transistor de commutation (t) dont le trajet de courant commandé a une extrémité à la terre et l'autre extrémité connectée à une source d'alimentation en tension continue (ug) à travers l'enroulement primaire d'un convertisseur de tension continue à découpage (sw) ;
l'enroulement secondaire du convertisseur de tension continue à découpage (sw) est connecté, par l'intermédiaire d'un arrangement redresseur (g1) entre l'électrode de focalisation (fe) du tube image (b) et celui des points (p) du réseau résistif (r) dont la tension est égale à la tension limite de focalisation affectée à l'une des limites de la plage de focalisation ;
la valeur en fonctionnement de la tension de focalisation (uf) diffère de la tension limite de focalisation, dans la direction de l'autre tension limite de focalisation, de la tension secondaire redressée.